# EUROPÄISCHE PATENTSCHRIFT

(11) **EP 1 685 018 B1**
(45) Veröffentlichungstag und Bekanntmachung des Hinweises auf die Patenterteilung: **15.06.2011**
(21) Anmeldenummer: 04818419.6
(22) Anmeldetag: 11.11.2004
(51) Int. Cl.: B62D 5/00, B62D 5/04, B62D 5/30

(54) **VERFAHREN ZUM ANSTEUERN EINER KUPPLUNGSEINHEIT**
METHOD FOR TRIGGERING A COUPLING UNIT
PROCEDE DE COMMANDE D'UNE UNITE D'ACCOUPLEMENT

(30) Priorität: 11.11.2003 DE 10352495
(43) Veröffentlichungstag der Anmeldung: 02.08.2006
(73) Patentinhaber: ROBERT BOSCH GMBH, 70442 Stuttgart (DE)
(72) Erfinder: PFEIFFER, Wolfgang, 71723 Grossbottwar (DE); MAYER, Werner, 70736 Fellbach (DE); HARTER, Werner, 75428 Illingen (DE); KOEPERNIK, Jochen, 03639 Schortewitz (DE)
(86) Internationale Anmeldenummer: PCT/EP2004/052918
(87) Internationale Veröffentlichungsnummer: WO 2005/047081

(56) Entgegenhaltungen:
- DE-A1- 10 052 343
- DE-A1- 10 114 600
- DE-C1- 10 135 736
- DE-C1- 19 805 015

## Beschreibung

Die Erfindung betrifft ein Verfahren zum Ansteuern einer mindestens zwei Kupplungswicklungen aufweisenden elektromechanischen Kupplungseinheit zur bedarfsgerechten Bereitstellung einer Kopplung zwischen einer ersten mechanischen Einrichtung und einer zweiten mechanischen Einrichtung sowie ein Lenksystem zur Bereitstellung einer Kopplung zwischen zwei mechanischen Einrichtungen.

Zur Bereitstellung einer Wechselwirkung zwischen zwei mechanischen Einrichtungen ist eine die Wechselwirkung vermittelnde Vorrichtung notwendig. Herkömmlicherweise ist eine derartige Vorrichtung als mechanische oder hydraulische Kupplung ausgebildet. Im Zuge der Weiterentwicklung elektrischer Steuerungen ist es mittlerweile möglich, eine derartige Wechselwirkung auch auf elektronischem Wege, z. B. durch Übermittlung von Steuerungssignalen, zu vermitteln. Dabei ist üblicherweise jeweils einer der beiden mechanischen Einrichtungen eine elektrische Steuereinheit bzw. ein sogenannter Momentensteller zugeordnet, durch den der Zustand der mechanischen Einrichtung sowohl überwacht als auch durch gezielte Steuerungsmaßnahmen beeinflußt werden kann.

Die Wechselwirkung zwischen den mechanischen Einrichtungen kann indirekt mittels der Momentensteller, die miteinander Daten oder Signale bezüglich des Zustands der mechanischen Einrichtungen austauschen, erfolgen.

Insbesondere in einem Kraftfahrzeug kann eine Wechselwirkung derartig vermittelt werden. Dies kann insbesondere die Lenkung, also die Übertragung eines Lenkbefehls von einem Fahrer mittels einer Lenkhandhabe an ein zu lenkendes Fahrzeugrad oder eine zu lenkende Fahrzeugachse, betreffen. Einrichtungen zur Übertragung von Lenkbefehlen zwischen der Lenkhandhabe und den zu lenkenden Fahrzeugrädern bzw. dem zu lenkenden Fahrzeugrad werden als Steer-by-Wire-Systeme bezeichnet. Mit diesen können herkömmliche Lenkeinrichtungen, wie Lenkstangen und dergleichen, ersetzt werden. Lenkbefehle werden dabei rechnergestützt z.B. über ein Kommunikationsnetzwerk des Kraftfahrzeuges übertragen.

Für den Fall, daß das Steer-by-Wire-System ausfallen sollte, muß die Möglichkeit der Lenkung aufrechterhalten werden. Dies ist dadurch realisierbar, daß der durch das Steer-by-Wire-System bereitgestellte Normalbetrieb der Lenkung mittels einer mechanischen Rückfallebene zur Bereitstellung eines Notbetriebes abgesichert wird. Im Normalbetrieb sind die von einem Fahrer betätigte Lenkhandhabe und gelenkte Fahrzeugräder über eine elektrische bzw. elektronische Regelstrecke miteinander verbunden. Im Notbetrieb sind die Lenkhandhabe und die gelenkten Fahrzeugräder über eine elektromechanische Kupplung zwangsgekoppelt.

Aus der Druckschrift DE 198 05 015 C1 ist bekannt, daß bei Notfällen eine mechanische Zwangskopplung zwischen Lenkrad und gelenkten Fahrzeugrädern wirksam wird. Zu diesem Zweck ist zwischen Lenkrad und gelenkten Fahrzeugrädern eine durch Federkraft schließend beaufschlagte Kupplung vorgesehen, die sich durch Einspeisung von hydraulischem Druck in ein Verdrängeraggregat öffnen läßt. Für ein Steer-by-Wire-System ist eine derartige Kupplung aufgrund ihrer hydraulischen Verschaltung nur bedingt geeignet. Die Steuerung des Hydraulikmediums durch das Steer-by-Wire-System müßte über einen Umweg, beispielsweise durch elektronische Beschaltung eines Hydraulikkreislaufs, bereitgestellt werden.

Bei der in der Druckschrift DE 100 46 168 A1 beschriebenen Vorrichtung wird eine Schaltkupplung mittels zweier elektrischer Motoren beschaltet. Zur Bereitstellung eines Steer-by-Wire-Betriebes halten die elektrischen Motoren die Schaltkupplung in einem geöffneten Zustand. Bei vorbestimmbaren Störungen wird die Schaltkupplung automatisch geschlossen, wobei unter anderem vorgesehen sein kann, den elektrischen Stellmotor, der zur weiteren Beaufschlagung gelenkter Fahrzeugräder ausgebildet ist, abzustellen. Bei dieser Art der Steuerung einer Kupplung wird die Funktion der Kupplung jedoch in zu hohem Maße durch die Funktion der Elektromotoren beeinflußt.

Die die Merkmale des Oberbegriffs des Anspruchs 1 bildende DE 101 35 736 C zeigt die Ansteuerung einer mindestens zwei Kupplungswicklungen aufweisenden elektromechanischen Kupplungseinheit. Durch die Kupplungen wird bedarfsgerecht eine Kopplung zwischen einer ersten mechanischen Einrichtung und einer zweiten mechanischen Einrichtung bereit gestellt. Hierbei kann jede der Kupplungswicklungen durch verbundene elektrische Steuereinheiten mit elektrischer Energie versorgt werden. Die Kupplungseinheit ist geschlossen und stellt eine Kopplung zwischen den beiden mechanischen Einrichtungen bereit, wenn keine der Kupplungswicklungen mit elektrischer Energie versorgt wird. Die Kupplungseinheit ist geöffnet und stellt keine Kopplung zwischen den beiden mechanischen Einrichtungen bereit, wenn wenigstens eine Kupplungswicklung mit elektrischer Energie versorgt wird.

Aufgabe der Erfindung ist es, die Betriebssicherheit eines Systems zur Übermittlung einer Wechselwirkung zwischen zwei mechanischen Einrichtungen, insbesondere bei einem Lenksystem für ein Kraftfahrzeug mit einem Steer-by-Wire-System, zu erhöhen.

Dieses Ziel wird mit einem Verfahren zum Ansteuern einer Kupplungseinheit mit den Merkmalen des Patentanspruchs 1 sowie einem Lenksystem mit den Merkmalen des Patentanspruchs 6 erreicht.

Das erfindungsgemäße Verfahren dient zum Ansteuern einer mindestens zwei Kupplungswicklungen aufweisenden elektromechanischen Kupplungseinheit, die zur bedarfsgerechten Kopplung zwischen einer ersten mechanischen Einrichtung und einer zweiten mechanischen Einrichtung vorgesehen ist. Dabei kann jede der Kupplungswicklungen durch mindestens eine verbundene elektrische Steuereinheit mit elektrischer Energie versorgt werden. Wenn keine der Kupplungswicklungen mit elektrischer Energie versorgt wird, d. h. im Notfall, ist die Kupplungseinheit geschlossen und stellt eine vorzugsweise mechanische Kopplung zwischen den beiden mechanischen Einrichtungen bereit. Wenn wenigstens eine der Kupplungswicklungen mit elektrischer Energie versorgt wird, ist die Kupplungseinheit geöffnet und stellt keine mechanische Kopplung zwischen den mechanischen Einrichtungen bereit. In diesem Fall ist die Kopplung über das Steer-by-Wire-System bereitgestellt.

Bei dem erfindungsgemäßen Verfahren ist somit die Betriebssicherheit eines Steer-by-Wire-Systems garantiert.

Die elektrischen Steuereinheiten können dabei innerhalb des Systems überwachende Funktionen übernehmen. Eine elektrische Steuereinheit bestromt die ihr zugeordnete Kupplungswicklung solange sie z. B. keinen Fehler innerhalb des Systems diagnostiziert oder solange sie selber nicht von einem Fehler betroffen ist bzw. ausfällt. Eine Kopplung zwischen den mechanischen Einrichtungen mittels der Kupplungseinheit wird dann bereitgestellt, wenn sämtliche elektrische Steuereinheiten entsprechende Fehler innerhalb des Systems diagnostizieren oder wenn sie ausfallen. Dies entspricht dem Zustand, daß das Steer-by-Wire-System, das ansonsten zur Bereitstellung einer Wechselwirkung bzw. Kopplung zwischen den mechanischen Einrichtungen ausgebildet ist, weitgehend oder vollständig ausgefallen ist.

Vorzugsweise ist bei dem erfindungsgemäßen Verfahren vorgesehen, daß die elektrischen Steuereinheiten jeweils einer der beiden mechanischen Einrichtungen zugeordnet sind und jeweils mit wenigstens einem Ansteuerelement die verbundene Kupplungswicklung in Abhängigkeit eines eigenen Systemzustandes mit elektrischer Energie versorgt. Ein Systemzustand kann bspw. die Funktionsfähigkeit der elektrischen Steuereinheit betreffen.

Erfindungsgemäß können die elektrischen Steuereinheiten Mittel aufweisen, die es ermöglichen, den Zustand eines Systems zu erkennen bzw. zu beurteilen, dementsprechend Entscheidungen zu treffen und eine Kupplungswicklung demgemäß mit Strom bzw. elektrischer Energie zu versorgen. Bei den Mitteln, die eine elektrische Steuereinheit zur Überwachung des Systemzustands aufweisen kann, kann es sich um Sensoren, Empfangseinrichtungen für Befehle oder auch Rechner- bzw. Computereinrichtungen handeln.

Bei einer weiteren vorteilhaften Ausgestaltung des erfindungsgemäßen Steuerungsverfahrens kann vorgesehen sein, daß ein Zustand der Kupplungseinheit und insbesondere der Kupplungswicklung mittels eines Sensors erfaßt wird. Dabei wird ein den Zustand charakterisierendes Sensorsignal über wenigstens eine Kommunikationsleitung von dem Sensor an die wenigstens eine zugeordnete elektrische Steuereinheit weitergeleitet.

Die wenigstens eine zugeordnete elektrische Steuereinheit versorgt vorzugsweise die ihr zugeordnete Kupplungswicklung, ausgehend von wenigstens einem Ansteuerelement, über wenigstens eine Zuleitung in Abhängigkeit des Zustands der Kupplungseinheit und insbesondere der Kupplungswicklung mit elektrischer Energie. Auf diese Weise wird erfindungsgemäß realisiert, daß gemäß dem erfindungsgemäßen Steuerungsverfahren nicht nur das ganze System oder Teile davon, sondern insbesondere auch die Kupplungseinheit und eine Kupplungswicklung der Kupplungseinheit, überwacht werden kann.

Ein Sensor zur Bereitstellung einer solchen Überwachung kann als Teil der Kupplungseinheit ausgebildet sein. Je nach Ausbildung des Sensors kann dieser auch außerhalb der Kupplungseinheit angeordnet sein. Ein Sensor kann als Magnetfeldsensor, elektromagnetischer Durchflutungssensor, Strommeßgerät oder dergleichen ausgebildet sein. Aufgrund des von ihm erzeugten Sensorsignals kann die zugeordnete elektrische Steuereinheit darüber eine Entscheidung treffen, ob eine Bestromung einer Kupplungswicklung notwendig ist oder nicht.

In Ausgestaltung ist vorgesehen, daß den verbundenen elektrischen Steuereinheiten jeweils eine eigene Stromversorgung zugeordnet ist. Es bietet sich an, daß die die unterschiedlichen Wicklungen der Kupplungseinheit versorgenden Steuereinheiten auch jeweils über eine eigene Stromversorgung verfügen. Fällt eine der Stromversorgungen aus, ist dennoch der sichere Betrieb gewährleistet. Erst bei Ausfall sämtlicher Stromversorgungen schließt die Kupplungseinheit und stellt die mechanische Kopplung bereit.

Die mit den Kupplungswicklungen verbundenen Steuereinheiten können sämtlich einer der beiden mechanischen Einrichtungen zugeordnet sein. Alternativ dazu können die zur Versorgung der Kupplungswicklungen vorgesehenen Steuereinheiten teilweise der ersten und teilweise der zweiten mechanischen Einrichtung zugeordnet sein.

Bei einer weiteren Ausbildung des erfindungsgemäßen Steuerungsverfahrens ist zur Realisierung eines Funktionstests vorgesehen, daß die Kupplungswicklungen einzeln kurzzeitig nicht mit elektrischer Energie versorgt werden, wobei die Kupplungseinheit während des Funktionstests geöffnet bleibt. Somit kann während des Normalbetriebes, wenn also die Wechselwirkung zwischen den mechanischen Einrichtungen durch die andere Kupplungseinrichtung bereitgestellt wird, die Funktionstüchtigkeit der Kupplungseinheit, insbesondere der Kupplungswicklungen, überprüft werden.

Eine solche Überprüfung im Rahmen eines Funktionstests kann durch die wenigstens eine zugeordnete elektrische Steuereinheit mittels des einer Kupplungswicklung zugeordneten Sensors vorgenommen werden. Die Kupplungswicklungen einer Kupplungseinheit werden dabei nacheinander bzw. abwechselnd, niemals aber gleichzeitig, nicht mit elektrischer Energie versorgt. Durch diesen Funktionstest kann während des Normalbetriebs des Systems sicherheitshalber ein Probe-Notbetrieb durchgeführt werden.

Das erfindungsgemäße Lenksystem zur Bereitstellung einer Kopplung zwischen einer ersten mechanischen Einrichtung und einer zweiten mechanischen Einrichtung weist eine Kupplungseinheit mit mindestens zwei Kupplungswicklungen und eine Anzahl von elektrischen Steuereinheiten auf, wobei jede Kupplungswicklung mit mindestens einer der elektrischen Steuereinheiten zur Versorgung mit elektrischer Energie verbunden ist. Die Kupplungseinheit ist derart ausgebildet, daß diese geschlossen ist und eine vorzugsweise mechanische Kopplung zwischen den beiden mechanischen Einrichtungen bereitstellt, wenn keine der Kupplungswicklungen mit elektrischer Energie versorgt ist. Die Kupplunseinheit ist geöffnet und stellt keine Kopplung zwischen den beiden mechanischen Einrichtungen bereit, wenn zumindest eine der Kupplungswicklungen mit elektrischer Energie versorgt ist.

Die erste mechanische Einrichtung ist typischerweise eine Lenkhandhabe, bspw. ein Lenkrad. Als zweite mechanische Einrichtung ist üblicherweise ein gelenktes Fahrzeugrad oder aber auch eine gelenkte Fahrzeugachse vorgesehen.

Die elektrischen Steuereinheiten weisen vorzugsweise jeweils wenigstens ein Ansteuerelement auf, das gegen eine Stromversorgung, gegen eine Masse oder gegen kein festes Potential geschaltet sein kann.

In Ausgestaltung des erfindungsgemäßen Systems sind Sensoren zur Erfassung der Funktion der Kupplungseinheit vorgesehen.

Über Datenleitungen kann ein Austausch von Informationen zwischen den elektrischen Steuereinheiten erfolgen.

Mittels des erfindungsgemäßen Lenksystems kann auf zweierlei Arten eine Wechselwirkung zwischen einer Lenkhandhabe und wenigstens einem gelenkten Fahrzeugrad vermittelt werden. So ist vorgesehen, daß das Lenksystem in einem Normalbetrieb nach dem Vorbild eines sogenannten Steer-by-Wire-Systems eine Wechselwirkung, insbesondere eine Kopplung zwischen der Lenkhandhabe und dem wenigstens einem gelenkten Fahrzeugrad, vermittelt. Steuer- bzw. Lenksysteme eines Fahrzeuglenkers werden durch die Lenkhandhabe empfangen und mittels des Handmomentenstellers registriert. Der Handmomentensteller übermittelt diese Steuer- bzw. Lenkbefehle elektronisch oder drahtlos an den Radmomentensteller.

Der Radmomentensteller beaufschlagt das wenigstens eine gelenkte Fahrzeugrad gemäß der Steuer- bzw. Lenkbefehle. Es kann jedoch auch vorgesehen sein, daß der Radmomentensteller Bewegungen des wenigstens einen gelenkten Fahrzeugrades detektiert und dementsprechend Signale über den Handmomentensteller und die Lenkhandhabe an den lenkenden Fahrer weiterleitet, so daß an diesen ein realitätsnahes Straßengefühl vermittelbar ist. Falls ein derart ausgebildetes Steer-by-Wire-System teilweise oder vollständig ausfallen sollte, wird die Wechselwirkung gemäß dem erfindungsgemäßen Steuerungsverfahren mittels des erfindungsgemäßen Lenksystems bereitgestellt. Somit wird für ein Steer-by-Wire-System eine mechanische Rückfallebene realisiert.

Somit ist durch das beschriebene Verfahren und das vorgestellte Lenksystem ein erfindungsgemäßes Steuerungskonzept gegeben.

Weitere Vorteile und Ausgestaltungen der Erfindung ergeben sich aus der Beschreibung und der beiliegenden Zeichnung. Die Erfindung ist anhand von Ausführungsbeispielen in des Zeichnung dargestellt und wird im folgenden unter Bezugnahme auf die Zeichnung ausführlich beschrieben. In dieser zeigt:
Figur 1 ein schematisches Blockschaltbild einer ersten Variante eines aus dem Stand der Technik bekannten Steuerungskonzepts,
Figur 2 ein schematisches Blockschaltbild einer zweiten Variante eines aus dem Stand der Technik bekannten Steuerungskonzepts,
Figur 3 ein schematisches Blockschaltbild einer dritten Variante eines aus dem Stand der Technik bekannten Steuerungskonzepts,
Figur 4 ein schematisches Blockschaltbild einer vierten Variante eines aus dem Stand der Technik bekannten Steuerungskonzepts,
Figur 5a ein schematisches Blockschaltbild einer ersten Ausführungsform einer Variante des erfindungsgemäßen Steuerungskonzepts,
Figur 5b ein schematisches Blockschaltbild einer zweiten Ausführungsform einer Variante des erfindungsgemäßen Steuerungskonzepts,
Figur 5c ein schematisches Blockschaltbild einer dritten Ausführungsform einer Variante des erfindungsgemäßen Steuerungskonzepts,
Figur 5d ein schematisches Blockschaltbild einer vierten Ausführungsform einer Variante des erfindungsgemäßen Steuerungskonzepts,
Figur 6a ein schematisches Blockschaltbild einer ersten Ausführungsform einer weiteren Variante des erfindungsgemäßen Steuerungskonzepts,
Figur 6b ein schematisches Blockschaltbild einer zweiten Ausführungsform einer weiteren Variante des erfindungsgemäßen Steuerungskonzepts,
Figur 6c ein schematisches Blockschaltbild einer dritten Ausführungsform einer weiteren Variante des erfindungsgemäßen Steuerungskonzepts,
Figur 6d ein schematisches Blockschaltbild einer vierten Ausführungsform einer weiteren Variante des erfindungsgemäßen Steuerungskonzepts,

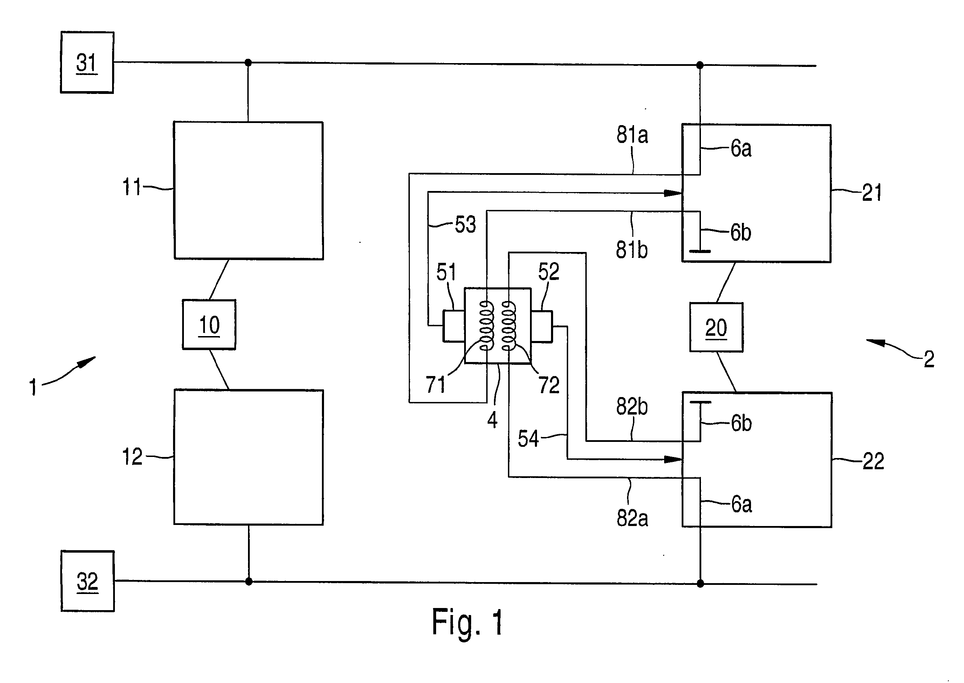

Figur 1 zeigt ein schematisches Blockschaltbild einer ersten Variante eines Steuerungskonzepts. Alle nachfolgenden Figuren bzw. Varianten bauen auf dieser Figur 1 auf. Dabei sind ohne Beschränkung der Allgemeinheit gleiche oder gleichartige Komponenten zur Realisierung des Steuerungsverfahrens, insbesondere für ein Steer-by-Wire-System, die in allen Figuren abgebildet sind, mit gleichen Bezugszeichen versehen.

In sämtlichen Figuren 1 bis 6d sind Steuerungsvorrichtungen bzw. -verfahren für elektronische Lenksysteme für Kraftfahrzeuge schematisch abgebildet. Derartige Lenksysteme werden als Steer-by-Wire-Systeme bezeichnet. Ein derartiges Steer-by-Wire-System dient der Verbindung zwischen einer Lenkhandhabe 10 und wenigstens einem gelenkten Fahrzeugrad 20 bzw. einer gelenkten Fahrzeugachse. Vorgesehene elektrische Steuereinheiten 11, 12, 21, 22 werden auch als Sub-/Halbsteuergeräte bezeichnet. Im Normalbetrieb des Steer-by-Wire-Systems wird zwischen der Lenkhandhabe 10 und dem gelenkten Fahrzeugrad 20 bzw. der gelenkten Fahrzeugachse eine Wechselwirkung elektronisch, d. h. durch Übertragung von Steuersignalen, vermittelt. Es besteht zwischen der Lenkhandhabe 10 und dem Fahrzeugrad 20 also keine mechanische Verbindung.

Für den Fall einer Fehlfunktion des Steer-by-Wire-Systems ist eine Bereitstellung einer mechanischen Absicherung bzw. Rückfallebene erforderlich, so daß die Lenkhandhabe 10 und das gelenkte Fahrzeugrad 20 mechanisch oder hydraulisch zwangsgekoppelt werden. Eine Zwangskopplung wird durch das Schließen einer Kupplungseinheit 4 bereitgestellt, bei Normalbetrieb des Steer-by-Wire-Systems ist die Kupplungseinheit 4 geöffnet. Mittels des Steuerungskonzepts kann die Kupplungseinheit 4 den jeweiligen Erfordernissen entsprechend geschaltet und/oder gesteuert werden.

Der Lenkhandhabe 10 ist ein Handmomentensteller 1 zugeordnet, dem wenigstens einen gelenkten Fahrzeugrad 20 ist ein Radmomentensteller 2 zugeordnet. Wenigstens eine Fahrzeugachse weist üblicherweise zwei Fahrzeugräder 20 auf. Die Fahrzeugachse weist zur Steuerung wenigstens einen Radmomentensteller 2 auf. Der Radmomentensteller 2 kann zur Beaufschlagung beider Fahrzeugräder 20 einer Fahrzeugachse ausgebildet sein. In einer anderen Ausgestaltung kann vorgesehen sein, daß jeweils einem Fahrzeugrad 20 ein Radmomentensteller 2 zur Steuerung bzw. Überwachung zugeordnet ist, so daß jedes Fahrzeugrad 20 individuell gelenkt werden kann. Der Handmomentensteller 1 ist aus einer ersten elektrischen Steuereinheit 11 und einer zweiten elektrischen Steuereinheit 12 zusammengesetzt. Entsprechend ist der Radmomentensteller 2 mit einer ersten elektrischen Steuereinheit 21 und einer zweiten elektrischen Steuereinheit 22 ausgebildet.

Die beiden ersten elektrischen Steuereinheiten 11, 21 sind mit einer ersten Stromversorgungseinheit 31 verbunden, die sie mit elektrischer Energie versorgt. Demgemäß sind die beiden zweiten elektrischen Steuereinheiten 12, 22 mit einer zweiten Stromversorgungseinheit 32 verbunden, die sie mit elektrischer Energie versorgt. Die voneinander unabhängigen Stromversorgungseinheiten 31, 32 können dieselbe elektrische Spannung oder voneinander verschiedene elektrische Spannungen aufweisen. Das gesamte Lenksystem besteht demnach aus vier eigensicheren und eigenständigen elektrischen Steuereinheiten 11, 12, 21, 22 und einer Kupplungseinheit 4.

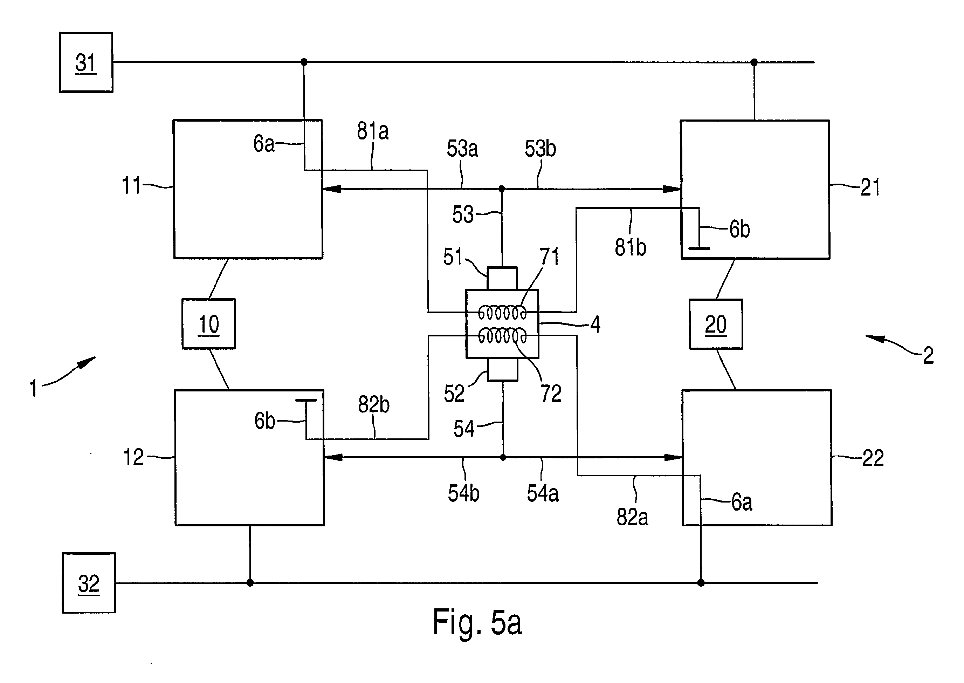

Durch geeignete Verschaltung ist in den Varianten des Steuerungskonzepts, wie in den Figuren 1 bis 4 abgebildet, zwischen jeweils zwei elektrischen Steuereinheiten 11, 12, 21, 22 eine Kupplungseinheit 4 angeordnet. In den Varianten des Steuerungskonzepts, wie in den Figuren 5a bis 6d schematisch abgebildet, ist zwischen vier elektrischen Steuereinheiten 11, 12, 21, 22 eine elektromechanische Kupplungseinheit 4 angeordnet.

Die in allen Varianten des Steuerungskonzepts gleiche Kupplungseinheit 4 mit redundanter Kupplungswicklung 71, 72 weist folgende Komponenten auf: eine erste Kupplungswicklung 71 mit einem zugeordneten ersten Sensor 51 sowie eine zweite Kupplungswicklung 72 mit einem zugeordneten zweiten Sensor 52. Die Sensoren 51, 52 detektieren bzw. überwachen den Schaltzustand der Kupplungseinheit 4, insbesondere der ihnen zugeordneten Kupplungswicklungen 71, 72. Mittels wenigstens eines der Sensoren 51, 52 kann nachgewiesen werden, ob die Kupplungseinheit 4 geöffnet oder geschlossen ist oder ob eine Kupplungswicklung 71, 72 bestromt oder nicht bestromt ist. Des weiteren kann die Temperatur der Kupplungseinheit 4 bestimmt werden. Darüber hinaus können mittels des wenigstens einen Sensors 51, 52 andere für die Lenkung bzw. Steuerung des Fahrzeugs bzw. die Funktion der Kupplungseinheit 4 relevante Parameter ermittelt werden.

Es ist vorgesehen, daß im Fall eines Notbetriebs die Lenkhandhabe 10 und das wenigstens eine gelenkte Fahrzeugrad 20 zwangsgekoppelt werden. Das Steer-by-Wire-System geht in diesem Fall in eine mechanische Rückfallebene über. Dies wird durch die elektromechanische Kupplungseinheit 4 mit den zwei Kupplungswicklungen 71, 72 realisiert. Die Kupplungseinheit 4 kann dabei jeweils durch die Bestromung einer einzelnen Kupplungswicklungen 71, 72 im geöffneten Zustand (Steer-by-Wire-Betrieb) gehalten werden.

Durch diese Maßnahme ist sichergestellt, daß ein einzelner Fehler nicht zum sofortigen Übergang in die Rückfallebene führt. Werden beide Kupplungswicklungen 71, 72 stromlos, stellt die Kupplungseinheit 4 die mechanische Zwangskopplung her, d. h. daß die Kupplungseinheit 4 geschlossen ist.

Beim Abschalten einer elektrischen Steuereinheit 11, 12, 21, 22 wird die Ansteuerung einer ersten zugeordneten Kupplungswicklung 71, 72 auch abgeschaltet. Schaltet zudem bzw. gleichzeitig eine zweite elektrische Steuereinheit 11, 12, 21, 22 ab, wird auch die zweite zugeordnete Kupplungswicklung 71, 72 abgeschaltet und die Kupplungseinheit 4 stellt eine mechanische Verbindung zwischen Lenkhandhabe 10 und dem wenigstens einen gelenkten Fahrzeugrad 20 bzw. der wenigstens einen gelenkten Fahrzeugachse bereit.

Um sich gegenseitig über den aktuellen Status der Kupplungsansteuerung und dem von den Sensoren 51, 52 der Kupplungseinheit 4 zurückgemeldeten Kupplungsstatus (geschlossen, offen, Temperatur, bzw. andere Parameter) zu informieren, tauschen die elektrischen Steuereinheit 11, 12, 21, 22 entsprechende Informationen über Datenbusse oder Kommunikationsleitungen 53, 54, 53a, 53b, 53c, 53d 54a, 54b, 54c, 54d mit dem jeweiligen Sensor 51, 52 der Kupplungseinheit 4 aus.

Je nach dem, welche überwachende bzw. steuernde Funktion der Kupplungseinheit 4 einer elektrischen Steuerungseinheit 11, 12, 21, 22 in einer jeweiligen Variante des Steuerungskonzepts zugeordnet ist, befindet bzw. befinden sich in der entsprechenden elektrischen Steuerungseinheit 11, 12, 21, 22 ein Ansteuerelement 6a, 6b, 6c oder zwei Ansteuerelemente 6a, 6b. Ein derartiges Ansteuerelement 6a, 6b, 6c kann als Leistungstransistor, Power-MOSFET oder dergleichen ausgebildet sein. Eine Kupplungswicklung 71, 72 ist hierbei durch geeignete Zuleitungen 81a, 81b, 81c, 82a, 82b, 82c mit zwei Ansteuerelementen 6a, 6b, 6c verbunden bzw. zwischen zwei Ansteuerelementen 6a, 6b, 6c geschaltet.

Eine Bestromung der Kupplungswicklung 71, 72 erfolgt durch die Ansteuerelemente 6a, 6b, 6c, mit denen sie verbunden ist. Die Ansteuerungselemente 6a, 6b, 6c können je nach Variante bzw. Ausführungsform des Steuerungskonzepts auf eine einzige elektrische Steuerungseinrichtung 11, 12, 21, 22 oder auf zwei elektrische Steuerungseinheiten 11, 12, 21, 22 verteilt sein. Bei verschiedenartigen Möglichkeiten der Verteilung der Ansteuerelemente 6a, 6b, 6c und/oder Leistungsendstufen zur Bestromung der Kupplungswicklung 71, 72 auf die vier elektronischen Steuerungseinheiten 11, 12, 21, 22 ist zu berücksichtigen, daß ein einzelner Fehler (z. B. der Ausfall einer Stromversorgung 31, 32) nicht zur Abschaltung beider Kupplungswicklung 71, 72 zugleich führen kann.

Im allgemeinen ist vorgesehen, daß eine elektrische Steuereinheit 11, 12, 21, 22 auf den aktuellen Zustand einer der Kupplungswicklungen 71, 72 oder der Kupplungseinheit 4 dadurch reagiert, daß diese, den jeweiligen Anforderungen entsprechend, eine Bestromung einer Kupplungswicklung 71, 72 zuläßt oder unterbindet.

Zur Sicherstellung der korrekten Funktion im Fehlerfall kann vorgesehen sein, die Kupplungswicklungen 71, 72 in zyklischen Testphasen während des Fahrbetriebs einzeln kurzzeitig abzuschalten. Über die vorhandenen Sensoren 51, 52 (z. B. Magnetfeldsensor, elektromagnetischer Durchflutungssensor) und/oder Strommessung mittels der Sensoren 51, 52 wird die Abschaltfähigkeit jeder einzelnen Kupplungswicklung 71, 72 überprüft, ohne daß die Kupplungseinheit 4 die mechanische Zwangskopplung bewirkt.

In der in Figur 1 dargestellten ersten Variante des Steuerungskonzepts steuert eine erste elektronische Einheit 21 des Radmomentenstellers 2 mittels der Ansteuerelemente 6a, 6b über geeignete Zuleitungen 81a, 81b die erste Kupplungswicklung 71 an. Eine zweite elektronische Steuerungseinheit 22 des Radmomentenstellers 2 steuert mittels der Ansteuerelemente 6a, 6b über geeignete Zuleitungen 82a, 82b die zweite Kupplungswicklung 72 an. Der Zustand der ersten Kupplungswicklung 71 wird von dem zugeordneten ersten Sensor 51 erfaßt. Die entsprechenden bzw. zugehörigen Sensorsignale werden über den Datenbus 53 an die erste elektrische Steuereinheit 21 des Radmomentenstellers 2 weitergeleitet.

Entsprechend wird der Zustand der zweiten Kupplungswicklung 72 von dem zugeordneten zweiten Sensor 52 erfaßt. Die entsprechenden Sensorsignale werden über den Datenbus 54 an die zweite elektrische Steuereinheit 21 des Radmomentenstellers 2 weitergeleitet.

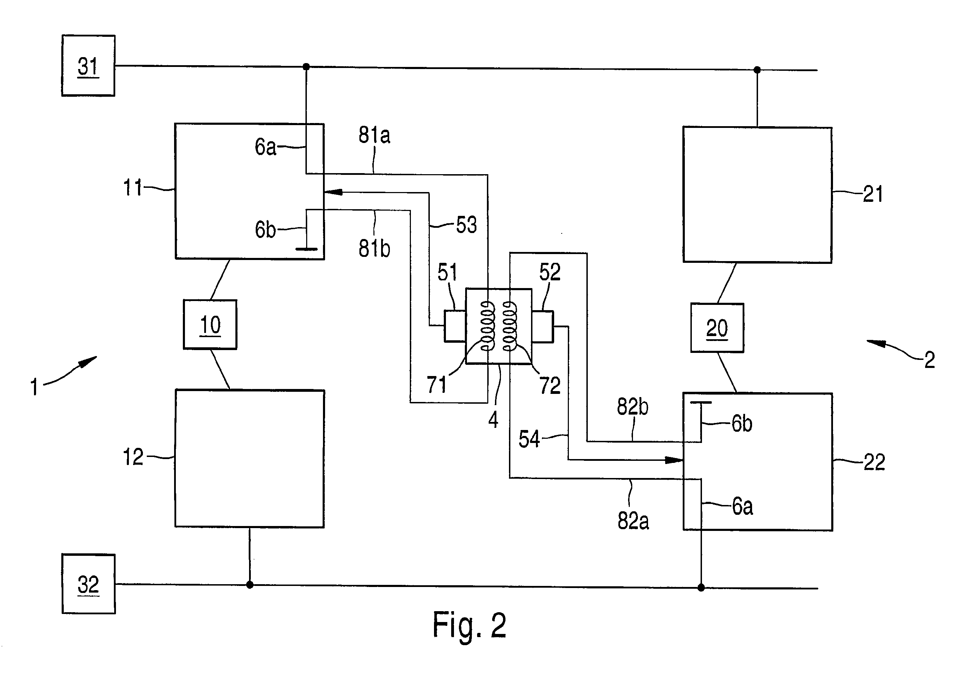

In der in Figur 2 dargestellten zweiten Variante des Steuerungskonzeptes ist vorgesehen, daß die erste elektrische Steuereinheit 11 des Handmomentenstellers die erste Kupplungswicklung 71 der Kupplungseinheit 4 steuert. Der Zustand der ersten Kupplungswicklung 71 wird durch den ersten Sensor 51 erfaßt und die erste Kommunikationsleitung 53 an die erste elektrische Steuereinheit 11 weitergeleitet. Die Bestromung der ersten Wicklung 71 erfolgt zwischen dem Ansteuerelement 6a über die Zuleitung 81a sowie dem Ansteuerelement 6b über die Zuleitung 81b. Demgemäß wird die zweite Kupplungswicklung 72 durch die zweite elektrische Einheit 22 des Radmomentenstellers 20 gesteuert. Der zustand der zweiten Kupplungswicklung 72 wird mittels des zweiten Sensors 52 erfaßt, ein entsprechendes Signal wird über die zweite Kommunikationsleitung 54 an die zweite elektrische Einheit 22 weitergeleitet. Die Bestromung der zweiten Kupplungswicklung erfolgt zwischen dem Ansteuerelement 6a über die Zuleitung 82a sowie dem Ansteuerelement 6b über die Zuleitung 82b.

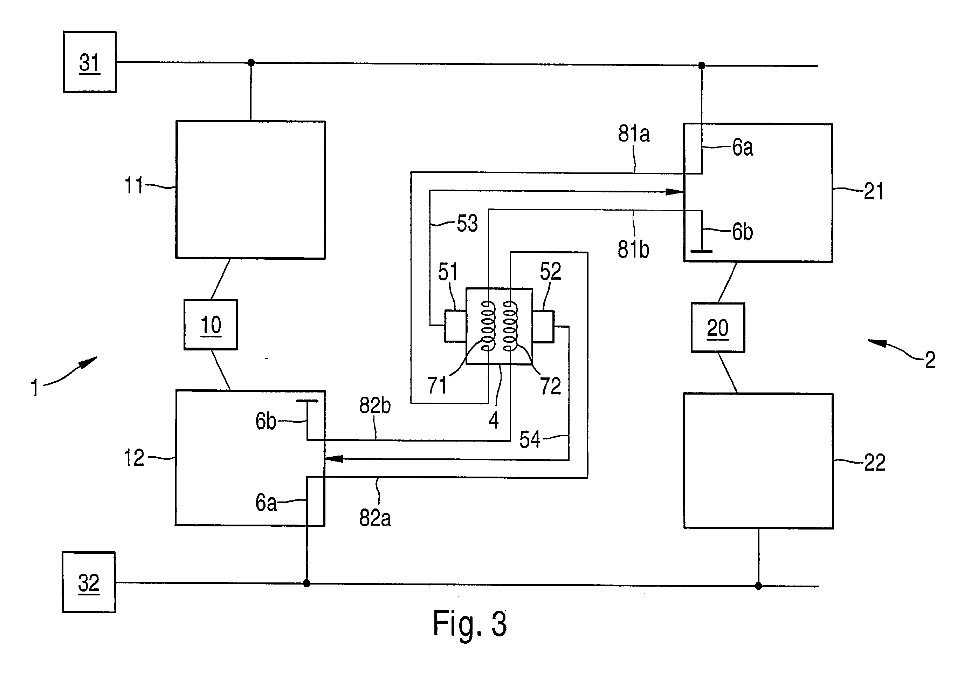

Die in der Figur 3 dargestellte dritte Variante des Steuerungskonzepts ist die Verschaltung der Kupplungseinheit 4 bzw. ihrer Kupplungswicklungen 71, 72, vergleichbar ausgebildet wie in der zweiten Variante, mit dem Unterschied, daß die Bestromung der Kupplungswicklungen 71, 72 nun durch die jeweils anderen elektrischen Steuereinheiten 21, 12 des Radmomentenstellers 20 bzw. des Handmomentenstellers 10 erfolgt.

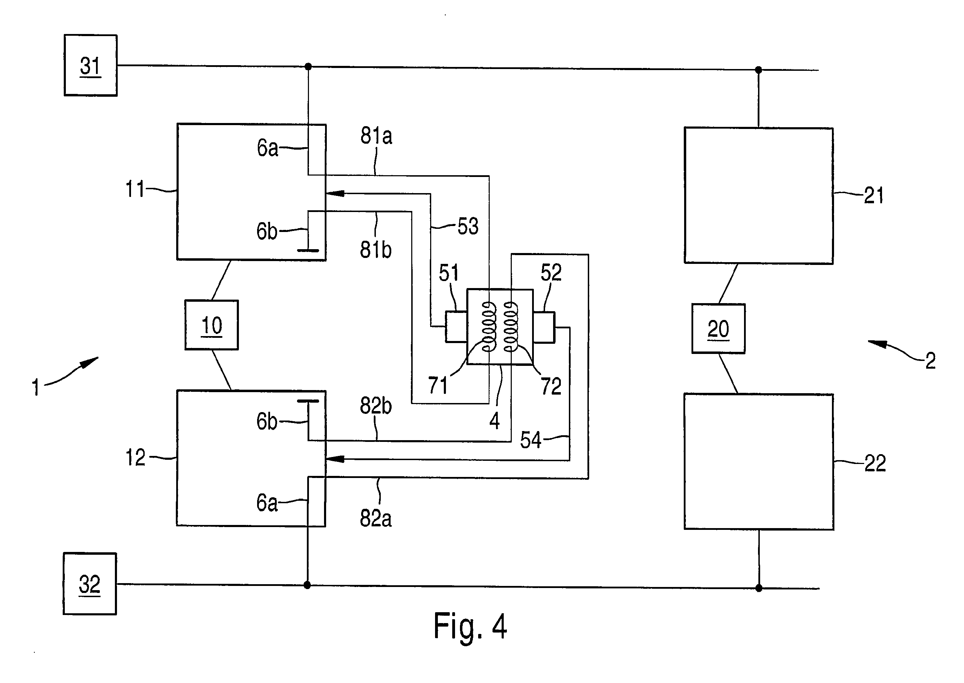

Die in Figur 4 dargestellte vierte Variante des Steuerungskonzeptes ist mit der ersten Variante aus der Figur 1 vergleichbar. Die Ansteuerung der beiden Kupplungswicklungen 71, 72 erfolgt jedoch durch die beiden elektrischen Steuereinheiten 11, 12 des Handmomentenstellers 10.

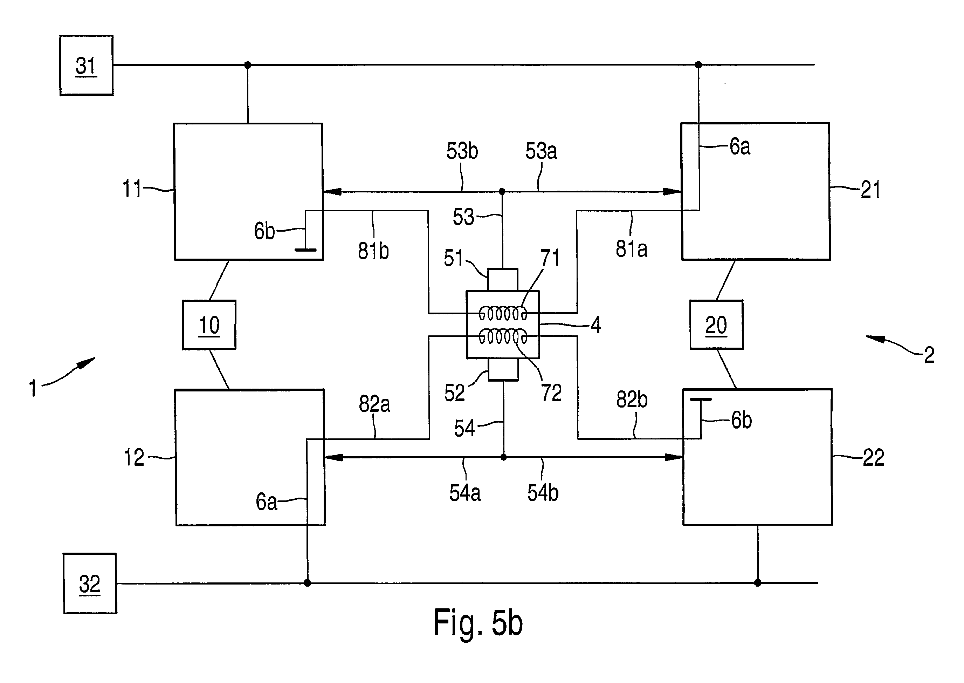

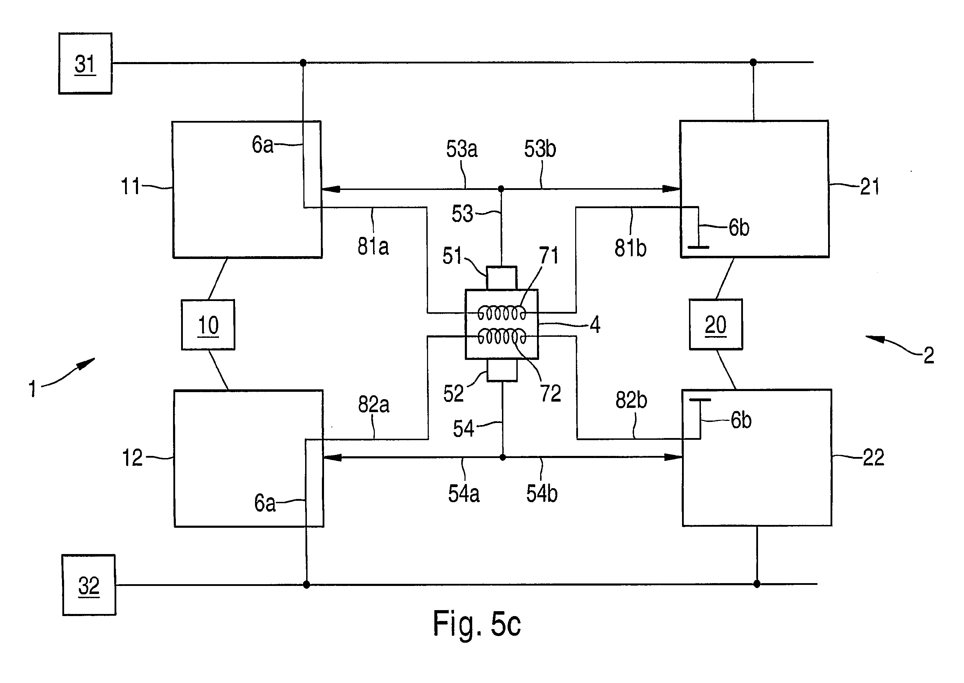

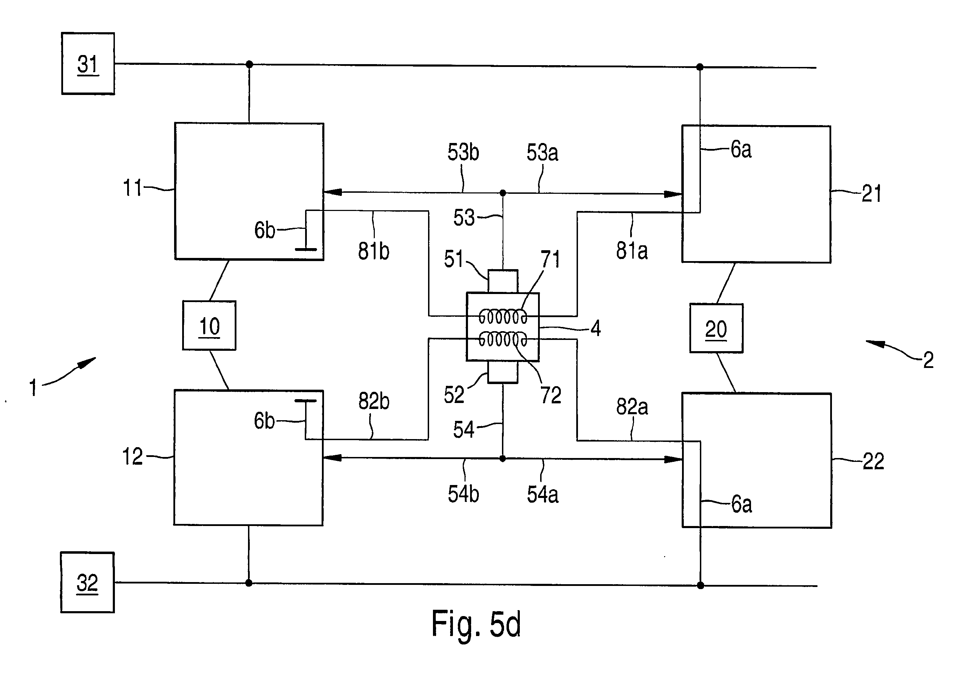

In den Figuren 5a, 5b, 5c, 5d werden die jeweils erste, zweite, dritte, vierte Ausführungsform einer Variante des erfindungsgemäßen Steuerungskonzepts dargestellt. In jeder der vier elektrischen Steuereinheiten 11, 12, 21, 22 befindet sich ein Ansteuerelement 6a, 6b, zur Bestromung bzw. Steuerung der Kupplungswicklungen 71, 72. In allen vier Ausführungsformen ist vorgesehen, daß ein Ansteuerelemente 6a jeweils gegen die erste oder zweite Stromversorgung 31, 32 geschaltet ist. Ein Ansteuerelement 6b ist gegen die Masse geschaltet.

Eine detaillierte Beschreibung der erfindungsgemäßen Komponenten wird am Beispiel der in Figur 5a dargestellten ersten Variante beschrieben. Dabei sind die beiden ersten elektrischen Steuereinheiten 11, 21 des Hand- bzw. Radmomentenstellers 10, 20 mit der ersten Kupplungswicklung 71 verbunden. Der Zustand der ersten Kupplungswicklung 71 wird mittels des ersten Sensors 51 erfaßt. Das den Zustand charakterisierende Sensorsignal wird über die Kommunikationsleitung 53 bzw. deren Verzweigungen 53a, 53b an die ersten elektrischen Einheiten 11, 21 geleitet. Die Bestromung bzw. Ansteuerung der ersten Kupplungswicklung 71 der Kupplungseinheit 4 erfolgt zwischen dem Ansteuerelement 6a über die Zuleitung 81a sowie dem Ansteuerelement 6b über die Zuleitung 81b. Je nach Ausführungsform der fünften Varianten des erfindungsgemäßen Steuerungskonzepts ist das Ansteuerelement 6a als Bestandteil der ersten elektrischen Steuereinheit 11 des Handmomentenstellers 1 und das Ansteuerelement 6b als Bestandteil der ersten elektrischen Steuereinheit 21 des Radmomentenstellers 2 ausgebildet oder umgekehrt.

Ebenso ist in der Figur 5a gezeigt, daß die beiden zweiten elektrischen Steuereinheiten 12, 22 des Hand- bzw. Radmomentenstellers 10, 20 mit der zweiten Kupplungswicklung 72 verbunden sind. Der Zustand der ersten Kupplungswicklung 72 wird mittels des zweiten Sensors 52 erfaßt. Das den Zustand charakterisierende Sensorsignal wird über die Kommunikationsleitung 54 bzw. deren Verzweigungen 54a, 54b an die ersten elektrischen Einheiten 11, 21 geleitet. Die Bestromung bzw. Ansteuerung der zweiten Kupplungswicklung 72 der Kupplungseinheit 4 erfolgt zwischen dem Ansteuerelement 6a über die Zuleitung 82a sowie dem Ansteuerelement 6b über die Zuleitung 82b. Je nach Ausführungsform der fünften Varianten des erfindungsgemäßen Steuerungskonzepts ist das Ansteuerelement 6a als Bestandteil der zweiten elektrischen Steuereinheit 12 des Handmomentenstellers 1 und das Ansteuerelement 6b als Bestandteil der zweiten elektrischen Steuereinheit 21 des Radmomentenstellers 2 ausgebildet oder umgekehrt.

Die zweite, dritte und vierte Ausführungsform der ersten Variante des erfindungsgemäßen Steuerungskonzepts ist in den Figuren 5b, 5c, 5d dargestellt. Diese Ausführungsformen untertscheiden sich von der ersten aus Figur 5a lediglich durch unterschiedliche Verteilungen von Ansteuerelementen 6a, 6b auf elektrische Steuereinheiten 11, 12, 21, 22.

Durch die Verteilung der Kupplungsansteuerung bzw. -beschaltung auf alle vier elektrischen Einheiten 11, 12, 21, 22 wird hier, im Vergleich zu den zuvor genannten Varianten 1 bis 4, eine höhere Common-Mode-Fehlersicherheit erreicht.

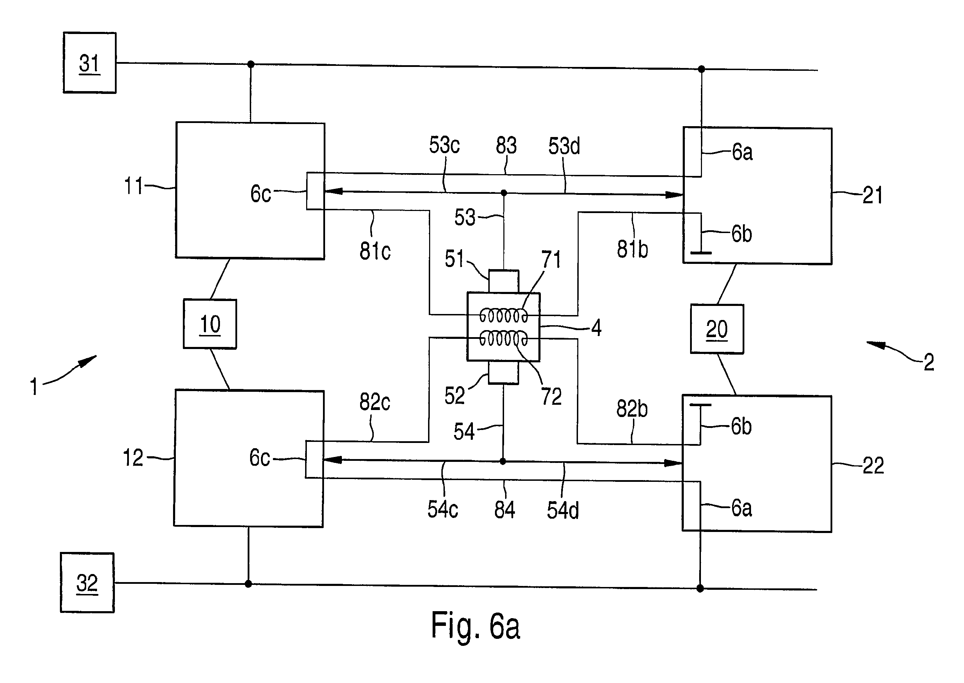

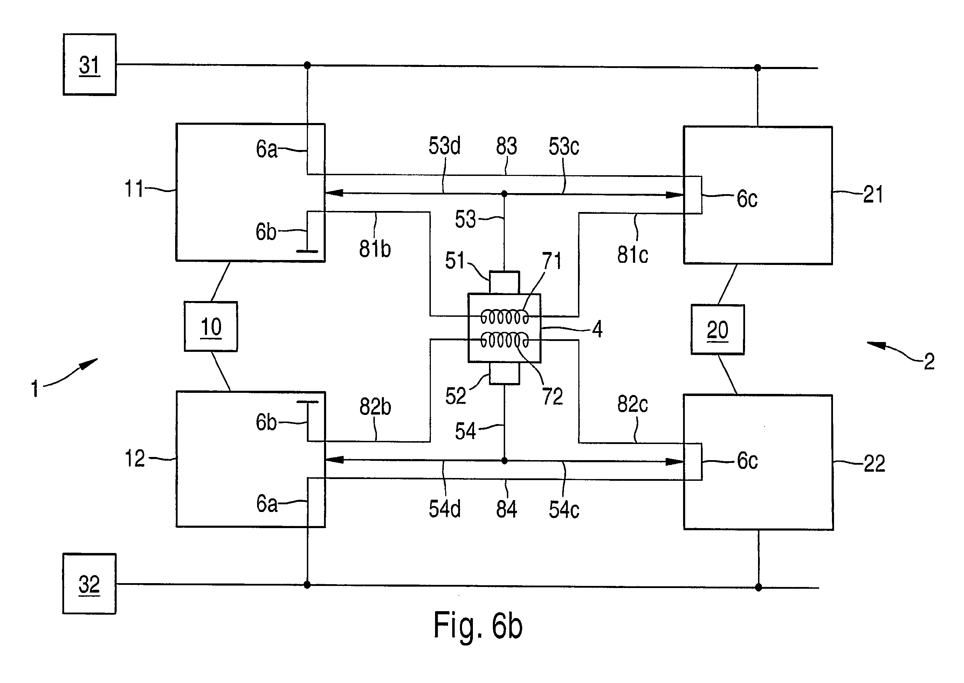

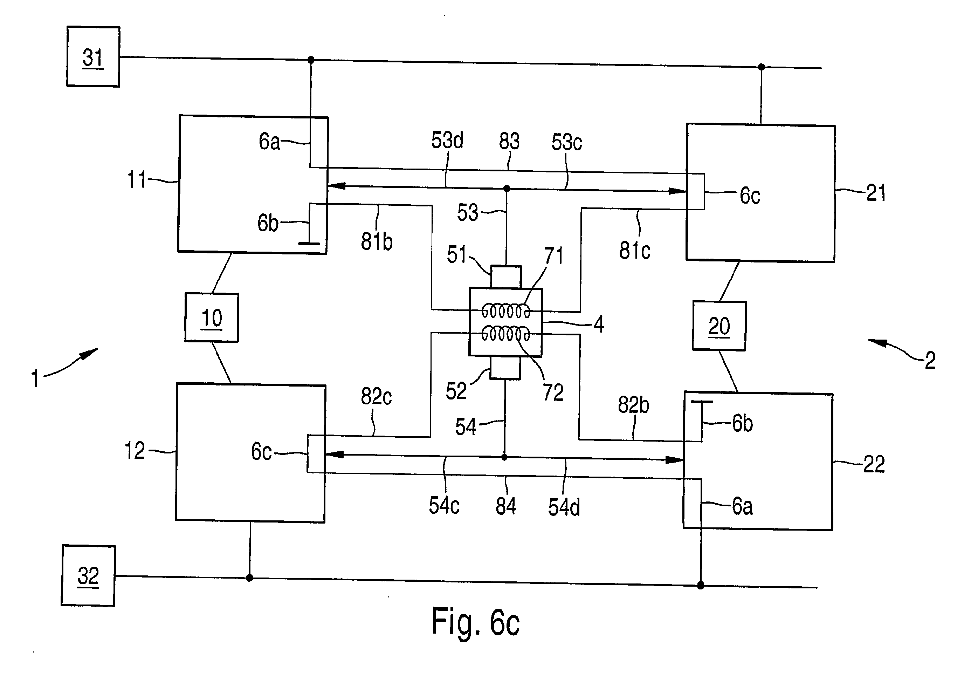

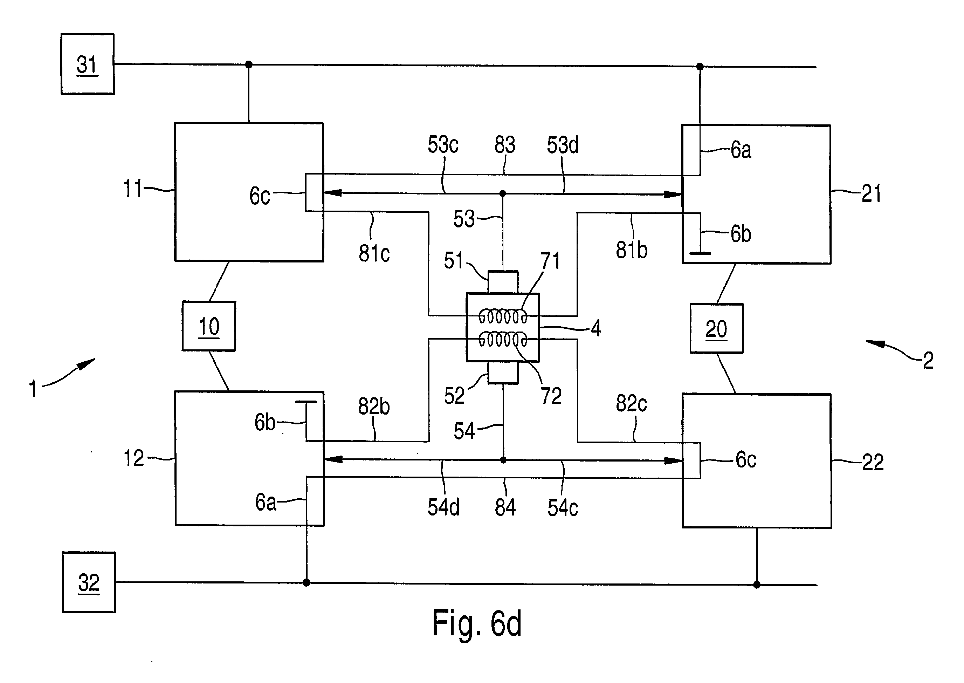

In den Figuren 6a, 6b, 6c, 6d wird jeweils die erste, zweite, dritte, vierte Ausführungsform einer weiteren Variante des erfindungsgemäßen Steuerungskonzeptes dargestellt. Zur Erläuterung der sechsten Variante wird die in der Figur 6a wiedergegebene Ausführungsform ausführlich beschrieben. Die anderen Ausführungsformen unterscheiden sich lediglich durch die Aufnahme von Ansteuerelementen 6a, 6b, 6c als Bestandteile von elektrischen Steuereinheiten 11, 12, 21, 22 und deren Verbindung mit anderen Komponenten des erfindungsgemäßen Lenksystems.

In der ersten Ausführungsform der weiteren Variante, dargestellt in Figur 6a, befinden sich in den beiden elektrischen Steuereinheiten 21, 22 des Radmomentenstellers 2 jeweils zwei Ansteuerelemente 6a, 6b. Dabei ist ein Ansteuerelement 6a der ersten elektrischen Steuereinheit 21 gegen die erste Stromversorgung 31 und das Ansteuerelement 6b der ersten elektrischen Steuereinheit 21 gegen die Masse geschaltet. Dementsprechend ist das Ansteuerelement 6a der zweiten elektrischen Steuereinheit 22 gegen die zweite Stromversorgung 32 geschaltet. Das Ansteuerelement 6b der zweiten elektrischen Einheit 22 ist demgemäß gegen Masse geschaltet. In den beiden elektrischen Steuereinheiten 11, 12 des Handmomentenstellers 10 befindet sich jeweils ein Ansteuerelement 6c, das an kein festes Potential (Stromversorgung 31, 32 oder Masse) angeschlossen ist.

Der Zustand der ersten Kupplungswicklung 71 wird durch den ersten Sensor 51 erfaßt. Ein entsprechendes Sensorsignal wird über die ersten Kommunikationsleitung 53 und deren Verzweigung 53c zur ersten elektrischen Steuereinheit 11 des Handmomentenstellers 1 sowie die Verzweigung 53d zur ersten elektrischen Steuereinheit 21 des Radmomentenstellers 2 weitergeleitet. Eine Bestromung bzw. Beschaltung bzw. Steuerung der ersten Kupplungswicklung 71 erfolgt, ausgehend von dem Ansteuerelement 6b der ersten elektrischen Steuereinheit 21 des Radmomentenstellers 2, über die Zuleitung 81b zu der ersten Kupplungswicklung 71 und über die Zuleitung 81c zu dem elektrischen Ansteuerelement 6c der ersten elektrischen Steuereinheit 11 des Handmomentenstellers 1.

Die Reihenschaltung wird über die zusätzliche verbindungsleitung 83 zwischen dem Ansteuerelement 6c der ersten elektrischen Steuereinheit 11 und dem Ansteuerelement 6a der ersten elektrischen Steuereinheit 21 geschlossen.

Der Zustand der zweiten Kupplungswicklung 72 wird durch den zweiten Sensor 52 erfaßt. Ein entsprechendes Sensorsignal wird über die zweiten Kommunikationsleitung 54 und deren Verzweigung 54c zur zweiten elektrischen Steuereinheit 12 des Handmomentenstellers 1 sowie die Verzweigung 54d zur zweiten elektrischen Steuereinheit 22 des Radmomentenstellers 2 weitergeleitet. Eine Bestromung bzw. Beschaltung bzw. Steuerung der zweiten Kupplungswicklung 72 erfolgt, ausgehend von dem Ansteuerelement 6b der zweiten elektrischen Steuereinheit 22 des Radmomentenstellers 2, über die Zuleitung 82b zu der zweiten Kupplungswicklung 72 und über die Zuleitung 82c zu dem elektrischen Ansteuerelement 6c der zweiten elektrischen Steuereinheit 12 des Handmomentenstellers 1.

Die Reihenschaltung wird über die zusätzliche Verbindungsleitung 84 zwischen dem Ansteuerelement 6c der ersten elektrischen Steuereinheit 11 und dem Ansteuerelement 6a der ersten elektrischen Steuereinheit 21 geschlossen.

Durch die Anordnung gemäß der sechsten Variante des Steuerungskonzeptes, in dem die beiden gegen ein festes Potential schaltenden Ansteuerelemente 6a, 6b der jeweiligen Ausführungsform entsprechend in einer elektrischen Steuereinheit 11, 12, 21, 22 angeordnet sind, werden Probleme vermieden, die durch einen Masseversatz zwischen den elektrischen Steuereinheiten 11, 12, 21, 22 der Hand- und Radmomentensteller 10, 20 auftreten können. Durch die Verteilung der Kupplungsansteuerung auf alle vier elektrischen Steuereinheiten 11, 12, 21, 22 wird eine hohe Common-Mode-Fehlersicherheit erreicht.

Die Leitungen 53 und 54 sind als Signalleitungen ausgebildet. Zwischen den Steuereinheiten 11, 12, 21, 22 gibt es mehrere, nicht eingezeichnete Datenbus-Leitungen.

## Patentansprüche

1. Verfahren zum Ansteuern einer mindestens zwei Kupplungswicklungen (71, 72) aufweisenden elektromechanischen Kupplungseinheit (4) zur bedarfsgerechten Bereitstellung einer Kopplung zwischen einer ersten mechanischen Einrichtung (10) und einer zweiten mechanischen Einrichtung (20), bei dem jede der Kupplungswicklungen (71, 72) durch verbundene elektrische Steuereinheiten (11, 12, 21, 22) mit elektrischer Energie versorgt werden kann, wobei
- die Kupplungseinheit (4) geschlossen ist und eine Kopplung zwischen den beiden mechanischen Einrichtungen (10, 20) bereitstellt, wenn keine der Kupplungswicklungen (71, 72) mit elektrischer Energie versorgt wird,
- die Kupplungseinheit (4) geöffnet ist und keine Kopplung zwischen den beiden mechanischen Einrichtungen (10, 20) bereitstellt, wenn wenigstens eine Kupplungswicklung (71, 72) mit elektrischer Energie versorgt wird,
**dadurch gekennzeichnet, dass**
- zwei erste verbundene elektrische Steuereinheiten (11, 12) jeweils der ersten mechanischen Einrichtung (10) und zwei zweite verbundene elektrische Steuereinheiten (21, 22) jeweils der zweiten mechanischen Einrichtung (20) zugeordnet sind,
- die Versorgung mit elektrischer Energie der ersten Kupplungswicklung (71) durch eine der ersten verbundenen elektrischen Steuereinheiten (11) und durch eine der zweiten verbundenen elektrischen Steuereinheiten (21) geschieht, und
- die Versorgung mit elektrischer Energie der zweiten Kupplungswicklung (72) durch die jeweils andere der ersten verbundenen elektrischen Steuereinheiten (12) und durch die jeweils andere der zweiten verbundenen elektrischen Steuereinheiten (22) geschieht.

2. Verfahren nach Anspruch 1, bei dem die elektrischen Steuereinheiten (11, 12, 21, 22) jeweils einer der beiden mechanischen Einrichtungen (10, 20) zur Ansteuerung zugeordnet sind und jeweils mit wenigstens einem Ansteuerelement (6a, 6b, 6c) die verbundene Kupplungswicklung (71, 72) in Abhängigkeit eines eigenen Systemzustandes mit elektrischer Energie versorgt.

3. Verfahren nach Anspruch 2, bei dem den verbundenen elektrischen Steuereinheiten (11, 12, 21, 22) jeweils eine eigene Stromversorgung zugeordnet ist.

4. Verfahren nach einem der Ansprüche 1 bis 3 bei dem die elektrischen Steuereinheiten (11, 12, 21, 22) mittels Sensoren die Funktion der Kupplung erfassen.

5. Verfahren nach einem der vorstehenden Ansprüche, wobei zur Realisierung eines Funktionstests die Kupplungswicklungen (71, 72) einzeln kurzzeitig nicht mit elektrischer Energie versorgt werden und die Kupplungseinheit (4) während des Funktionstests geöffnet bleibt.

6. Lenksystem zur Bereitstellung einer Kopplung zwischen einer ersten mechanischen Einrichtung (10) und einer zweiten mechanischen Einrichtung mit:
- einer Kupplungseinheit (4), die mindestens zwei Kupplungswicklungen (71, 72) aufweist, und
- einer Anzahl von elektrischen Steuereinheiten (11, 12, 21, 22), wobei jede Kupplungswicklung (71, 72) mit mindestens einer der elektrischen Steuereinheiten (11, 12, 21, 22) zur Versorgung mit elektrischer Energie derart verbunden ist, dass
- zwei erste verbundene elektrische Steuereinheiten (11, 12) jeweils der ersten mechanischen Einrichtung (10) und zwei zweite verbundene elektrische Steuereinheiten (21, 22) jeweils der zweiten mechanischen Einrichtung (20) zugeordnet sind, und
- die Versorgung mit elektrischer Energie der ersten Kupplungswicklung (71) durch eine der ersten verbundenen elektrischen Steuereinheiten (11) und durch eine der zweiten verbundenen elektrischen Steuereinheiten (21) geschieht, und
- die Versorgung mit elektrischer Energie der zweiten Kupplungswicklung (72) durch die jeweils andere der ersten verbundenen elektrischen Steuereinheiten (12) und durch die jeweils andere der zweiten verbundenen elektrischen Steuereinheiten (22) geschieht,
wobei die Kupplungseinheit (4) derart ausgebildet ist, dass
- die Kupplungseinheit (4) geschlossen ist und eine Kopplung zwischen den beiden mechanischen Einrichtungen (10, 20) bereitstellt, wenn keine der Kupplungswicklungen (71, 72) mit elektrischer Energie versorgt ist, und
- die Kupplungseinheit (4) geöffnet ist und keine Kopplung zwischen den beiden mechanischen Einrichtungen (10, 20) bereitstellt, wenn wenigstens eine Kupplungswicklung (71, 72) mit elektrischer Energie versorgt ist.

7. Lenksystem nach Anspruch 6, bei dem die erste mechanische Einrichtung (10) eine Lenkhandhabe (10) und die zweite mechanische Einrichtung (20) ein gelenktes Fahrzeugrad (20) ist.

8. Lenksystem nach Anspruch 6 oder 7, bei dem Sensoren (51, 52) zur Erfassung der Funktion der Kupplungseinheit 30 (4) vorgesehen sind.

9. Lenksystem nach einem der Ansprüche 6 bis 8, bei dem in den elektrischen Steuereinheiten (11, 12, 21, 22) jeweils mindestens ein Ansteuerelement (6a, 6b, 6c) zur Versorgung der verbundenen Kupplungswicklung (71, 72) mit elektrischer Energie vorgesehen ist.

10. Lenksystem nach einem der Ansprüche 6 bis 9, bei dem Datenleitungen zum Austausch von Informationen zwischen den elektrischen Steuereinheiten (11, 12, 21, 22) vorgesehen sind.

## Claims

1. Method for actuating an electromechanical coupling unit (4) having at least two coupling windings (71, 72), for making available a coupling between a first mechanical device (10) and a second mechanical device (20) according to requirements, in which each of the coupling windings (71, 72) can be supplied with electrical energy by connected electric control units (11, 12, 21, 22), wherein
- the coupling unit (4) is closed and a coupling is brought about between the two mechanical devices (10, 20) if none of the coupling windings (71, 72) is supplied with electrical energy,
- the coupling unit (4) is opened and no coupling is brought about between the two mechanical devices (10, 20) if at least one coupling winding (71, 72) is supplied with electrical energy,
**characterized in that**
- two first connected electric control units (11, 12) are each assigned to the first mechanical device (10), and two second connected electric control units (21, 22) are each assigned to the second mechanical device (20),
- the supply with electrical energy to the first coupling winding (71) is provided by one of the first connected electric control units (11) and by one of the second connected electric control units (21), and
- the supply with electrical energy to the second coupling winding (72) is provided by the respective other control unit of the first connected electric control units (12) and by the respective other control unit of the second electric control units (22).

2. Method according to Claim 1, in which the electric control units (11, 12, 21, 22) are each assigned to one of the two mechanical devices (10, 20) for the purpose of actuation, and each supply electrical energy by means of at least one actuation element (6a, 6b, 6c) to the connected coupling winding (71, 72) as a function of a system state of said electric control unit.

3. Method according to Claim 2, in which the connected electric control units (11, 12, 21, 22) are each assigned a separate power supply.

4. Method according to one of Claims 1 to 3, in which the electric control units (11, 12, 21, 22) sense the function of the coupling by means of sensors.

5. Method according to one of the preceding claims, wherein, in order to implement a functional test, the coupling windings (71, 72) are individually briefly not supplied with electrical energy, and the coupling unit (4) remains opened during the functional test.

6. Steering system for making available a coupling between a first mechanical device (10) and a second mechanical device having:
- a coupling unit (4) which has at least two coupling windings (71, 72),
and
- a number of electric control units (11, 12, 21, 22), wherein each coupling winding (71, 72) is connected to at least one of the electric control units (11, 12, 21, 22) in order to be supplied with electrical energy, in such a way that
- two first connected electric control units (11, 12) are each assigned to the first mechanical device (10), and two second connected electric control units (21, 22) are each assigned to the second mechanical device (20), and
- the supply of the electrical energy to the first coupling winding (71) is provided by one of the first connected electric control units (11) and by one of the second connected electric control units (21), and
- the supply of electrical energy to the second coupling winding (72) is provided by the respective other control unit of the first connected electric control units (12) and by the respective other control unit of the second connected electric control units (22),
wherein the coupling unit (4) is embodied in such a way that
- the coupling unit (4) is closed and a coupling is made available between the two mechanical devices (10, 20) if none of the coupling windings (71, 72) is supplied with electrical energy, and
- the coupling unit (4) is opened and no coupling is made available between the two mechanical devices (10, 20) if the at least one coupling winding (71, 72) is supplied with electrical energy.

7. Steering system according to Claim 6, in which the first mechanical device (10) is a steering handle (10) and the second mechanical device (20) is a steered vehicle wheel (20).

8. Steering system according to Claim 6 or 7, in which sensors (51, 52) are provided for sensing the function of the coupling unit (4).

9. Steering system according to one of Claims 6 to 8, in which at least one actuation element (6a, 6b, 6c) for supplying the connected coupling winding (71, 72) with electrical energy is provided in each of the electric control units (11, 12, 21, 22).

10. Steering system according to one of Claims 6 to 9, in which data lines are provided for exchanging information between the electric control units (11, 12, 21, 22).

## Revendications

1. Procédé pour commander une unité d'accouplement (4) électromécanique qui présente au moins deux enroulements d'accouplement (71, 72) en vue de la fourniture adaptée au besoin d'un accouplement entre un premier dispositif mécanique (10) et un deuxième dispositif mécanique (20), selon lequel chacun des enroulements d'accouplement (71, 72) peut être alimenté en énergie électrique par des unités de commande électriques connectées (11, 12, 21, 22), selon lequel
- l'unité d'accouplement (4) est fermée et fournit un accouplement entre les deux dispositifs mécaniques (10, 20) lorsqu'aucun des enroulements d'accouplement (71, 72) n'est alimenté en énergie électrique,
- l'unité d'accouplement (4) est ouverte et ne fournit aucun accouplement entre les deux dispositifs mécaniques (10, 20) lorsqu'au moins un enroulement d'accouplement (71, 72) est alimenté en énergie électrique,
**caractérisé en ce que**
- deux premières unités de commande électriques connectées (11, 12) sont respectivement associées au premier dispositif mécanique (10) et deux deuxièmes unités de commande électriques connectées (21, 22) sont respectivement associées au deuxième dispositif mécanique,
- l'alimentation en énergie électrique du premier enroulement d'accouplement (71) s'effectue par l'une des premières unités de commande électriques connectées (11) et par l'une des deuxièmes unités de commande électriques connectées (21) et
- l'alimentation en énergie électrique du deuxième enroulement d'accouplement (72) s'effectue à chaque fois par l'autre des premières unités de commande électriques connectées (12) et à chaque fois par l'autre des deuxièmes unités de commande électriques connectées (22).

2. Procédé selon la revendication 1, selon lequel les unités de commande électriques (11, 12, 21, 22) sont respectivement associées à l'un des deux dispositifs mécaniques (10, 20) en vue de la commande et alimentent respectivement en énergie électrique l'enroulement d'accouplement connecté (71, 72) avec au moins un élément de commande (6a, 6b, 6c) en fonction d'un état du système propre.

3. Procédé selon la revendication 2, selon lequel une alimentation électrique propre est respectivement associée aux unités de commande électriques connectées (11, 12, 21, 22).

4. Procédé selon l'une des revendications 1 à 3, selon lequel les unités de commande électriques (11, 12, 21, 22) détectent le fonctionnement de l'accouplement au moyen de capteurs.

5. Procédé selon l'une des revendications précédentes, selon lequel, pour réaliser un essai de fonctionnement, les enroulements d'accouplement (71, 72) ne sont pas alimentés individuellement en énergie électrique pendant un court instant et l'unité d'accouplement (4) reste ouverte pendant l'essai de fonctionnement.

6. Système de direction pour fournir un accouplement entre un premier dispositif mécanique (10) et un deuxième dispositif mécanique, comprenant :
- une unité d'accouplement (4) qui présente au moins deux enroulements d'accouplement (71, 72) et
- une pluralité d'unités de commande électriques (11, 12, 21, 22), chaque enroulement d'accouplement (71, 72) étant relié avec au moins l'une des unités de commande électriques (11, 12, 21, 22) en vue de l'alimentation en énergie électrique, de telle sorte que
- deux premières unités de commande électriques connectées (11, 12) sont respectivement associées au premier dispositif mécanique (10) et deux deuxièmes unités de commande électriques connectées (21, 22) sont respectivement associées au deuxième dispositif mécanique (20),
- l'alimentation en énergie électrique du premier enroulement d'accouplement (71) s'effectue par l'une des premières unités de commande électriques connectées (11) et par l'une des deuxièmes unités de commande électriques connectées (21) et
- l'alimentation en énergie électrique du deuxième enroulement d'accouplement (72) s'effectue à chaque fois par l'autre des premières unités de commande électriques connectées (12) et à chaque fois par l'autre des deuxièmes unités de commande électriques connectées (22),
l'unité d'accouplement (4) étant configurée de telle sorte que
- l'unité d'accouplement (4) est fermée et fournit un accouplement entre les deux dispositifs mécaniques (10, 20) lorsqu'aucun des enroulements d'accouplement (71, 72) n'est alimenté en énergie électrique, et
- l'unité d'accouplement (4) est ouverte et ne fournit aucun accouplement entre les deux dispositifs mécaniques (10, 20) lorsqu'au moins un enroulement d'accouplement (71, 72) est alimenté en énergie électrique.

7. Système de direction selon la revendication 6, dans lequel le premier dispositif mécanique (10) est un volant de direction (10) et le deuxième dispositif mécanique (20) est une roue de véhicule orientable.

8. Système de direction selon la revendication 6 ou 7, dans lequel sont prévus des capteurs (51, 52) pour détecter le fonctionnement de l'unité d'accouplement (4).

9. Système de direction selon l'une des revendications 6 à 8, dans lequel au moins un élément de commande (6a, 6b, 6c) est à chaque fois prévu dans les unités de commande électriques (11, 12, 21, 22) pour l'alimentation en énergie électrique de l'enroulement d'accouplement (71, 72) connecté.

10. Système de direction selon l'une des revendications 6 à 9, dans lequel sont prévues des lignes de données pour l'échange d'informations entre les unités de commande électriques (11, 12, 21, 22).
